# EUROPEAN PATENT APPLICATION

(11) **EP 4 838 903 A1**
(43) Date of publication of application: **11.11.2026**
(21) Application number: 24918963.0
(22) Date of filing: 26.11.2024
(51) Int. Cl.: H04N 23/74, H04N 23/63, H04N 23/62, H04N 23/667, G06T 5/50, G06T 5/20

(54) **METHOD FOR PROCESSING IMAGE, AND ELECTRONIC DEVICE THEREFOR**

(30) Priority: 15.01.2024 KR 20240006362; 23.02.2024 KR 20240026589
(71) Applicant: Samsung Electronics Co., Ltd., Suwon-si, Gyeonggi-do 16677 (KR)
(72) Inventor: LEE, Sihyoung, Suwon-si, Gyeonggi-do 16677 (KR)
(74) Representative: HGF
(86) International application number: PCT/KR2024/018855
(87) International publication number: WO 2025/154936

(57) **Abstract**

An electronic device according to one embodiment of the present disclosure may comprise a camera, a display, a processor, and a memory for storing instructions. When executed by the processor, the instructions enables the electronic device to: identify configuration information of the camera; determine, on the basis of at least one from among the identified configuration information, a lighting environment, the type of subject, or the strength of a neutral density (ND) filter effect, a first photographing configuration for providing a preview image; when a photographing command is identified while providing the preview image on the display on the basis of the first photographing configuration, determine a second photographing configuration for short exposure image acquisition and the number of times a short exposure image is captured; acquire a plurality of short exposure images on the basis of the second photographing configuration during a designated time interval; and synthesize at least some of the acquired plurality of short exposure images, thereby acquiring a long exposure image corresponding to the designated time interval. Other various embodiments identified by the present document are possible.

## Description

### [Technical Field]

The disclosure relates to a method for processing images and an electronic device therefor.

### [Background Art]

As carrying portable electronic devices has been generalized in our daily lives, the use of camera functions of portable electronic devices has increased significantly, and photographing with portable electronic devices is recognized as an indispensable function to the extent that the camera functions become a criterion for selecting portable electronic devices. Recently, as the camera functions of portable electronic devices advance, technologies for acquiring clear images in various photographing environments are being applied. For example, neutral density (ND) filter effects may be provided to reduce the amounts of light entering a camera while preserving colors of a scene according to scene characteristics or lighting environment of an image that a user desires to capture.

The above information is presented as related art information only to assist with understanding of the disclosure. No determination or assertion is made as to whether any of the above might be applicable as prior art with regard to the disclosure.

### [Disclosure of Invention]

### [Solution to Problem]

According to an embodiment of the disclosure, an electronic device may include: a camera; a display; a processor; and a memory configured to store instructions. When executed by the processor, the instructions may cause the electronic device to identify configuration information of the camera. When executed by the processor, the instructions may cause the electronic device to determine a first photographing configuration for providing a preview image based on at least one of the identified configuration information, a lighting environment, a type of a subject or a strength of a neutral density (ND) filter effect. When executed by the processor, the instructions may cause the electronic device to, when a photographing command is identified while the preview image is being provided on the display based on the first photographing configuration, determine a second photographing configuration for acquiring a short exposure image and the number of times of capturing the short exposure image. When executed by the processor, the instructions may cause the electronic device to acquire a plurality of short exposure images based on the second photographing configuration for a designated time period. When executed by the processor, the instructions may cause the electronic device to acquire a long exposure image corresponding to the designated time period by synthesizing at least some of the acquired plurality of short exposure images.

According to an embodiment of the disclosure, a method may include identifying configuration information of a camera included in an electronic device. The method may include determining a first photographing configuration for providing a preview image based on at least one of the identified configuration information, a lighting environment, a type of a subject or a strength of a neutral density (ND) filter effect. The method may include, when a photographing command is identified while the preview image is being provided through a display of the electronic device based on the first photographing configuration, determining a second photographing configuration for acquiring a short exposure image and the number of times of capturing the short exposure image. The method may include acquiring a plurality of short exposure images based on the second photographing configuration for a designated time period. The method may include acquiring a long exposure image corresponding to the designated time period by synthesizing at least some of the acquired plurality of short exposure images.

According to an embodiment, a computer-readable recording medium may include programs executable in a computer. The programs may perform an operation of identifying configuration information of a camera included in an electronic device. The programs may perform an operation of determining a first photographing configuration for providing a preview image based on at least one of the identified configuration information, a lighting environment, a type of a subject or a strength of a neutral density (ND) filter effect. The programs may perform an operation of, when a photographing command is identified while the preview image is being provided through a display of the electronic device based on the first photographing configuration, determining a second photographing configuration for acquiring a short exposure image and the number of times of capturing the short exposure image. The programs may perform an operation of acquiring a plurality of short exposure images based on the second photographing configuration for a designated time period. The programs may perform an operation of acquiring a long exposure image corresponding to the designated time period by synthesizing at least some of the acquired plurality of short exposure images.

### [Brief Description of Drawings]

FIG. 1 is a block diagram of an electronic device in a network environment according to an embodiment.
FIG. 2 is a block diagram illustrating a camera module according to various embodiments.
FIG. 3 is a view to explain a configuration of an electronic device according to an embodiment.
FIG. 4 is a view to explain a method for generating a long exposure image to which an ND filter effect is applied according to an embodiment.
FIG. 5 is a flowchart illustrating an operation method of an electronic device according to an embodiment.
FIG. 6 is a flowchart illustrating a method for determining a photographing configuration to acquire a preview image in an auto mode according to an embodiment.
FIG. 7 is a flowchart illustrating a method for updating a user photographing configuration value while providing a preview image in an auto mode according to an embodiment.
FIG. 8 is a flowchart illustrating a method for determining a photographing configuration for acquiring a preview image in a manual mode according to an embodiment.
FIG. 9 is a flowchart illustrating a method for generating a long exposure image to which an ND filter effect is applied using a plurality of short exposure images according to an embodiment.
FIG. 10 is a view to explain a detailed configuration of an electronic device according to an embodiment.
FIGS. 11A and 11B are views to explain an ND filter effect expressed on a long exposure image based on dynamic change in a photographing configuration for acquiring a short exposure image according to an embodiment.
FIGS. 12A and 12B are views to explain a method for setting an ND filter effect through an execution screen of a camera application according to an embodiment.

Regarding explanation of the drawings, the same or like reference numerals may be used to refer to the same or like components.

### [Mode for the Invention]

Hereinafter, various embodiments of the disclosure will be described with reference to the accompanying drawings. It should be appreciated that various embodiments are not intended to limit the disclosure to particular embodiments and include various modifications, equivalents, and/or alternatives of embodiments of the disclosure.

A neutral density (ND) filter may provide a function of reducing an amount of light entering a camera during photographing. An electronic device has to set a short exposure time to acquire an image of appropriate brightness when the ND filter function is not applied. However, the short exposure time may result in unnatural expression of the motion of a subject. If the exposure time is increased to express the motion of the subject, the amount of light entering the camera for the exposure time may also increase and an over-exposed result image may be acquired. When the ND filter function is applied, the amount of light may decrease even if the exposure time increases, so that it is possible to capture a long exposure image of appropriate brightness.

An electronic device such as a smartphone may provide the function of the ND filter through software. For example, an electronic device may acquire a plurality of short exposure images having the same brightness as the image that a user desires to acquire for an exposure time set by the user, and may generate an image having a long exposure effect by synthesizing the acquired short exposure images. To acquire the long exposure image, the electronic device may calculate brightness of a result image (long exposure image) based on a photographing configuration (for example, ISO, SS, EV) of a camera set by the user, and, upon receiving a photographing command, the electronic device may determine a photographing configuration for acquiring short exposure images used for synthesizing the result image, and the number of times of capturing the short exposure images. The electronic device may generate the result image by synthesizing the plurality of short exposure images which are acquired at the same intervals based on the photographing configuration and the number of times of capturing determined as above. In this process, however, scene characteristics of the image that the user desires to acquire are not considered, degrading quality of the long exposure image acquired as a result of photographing.

In various embodiments of the disclosure, a photographing configuration for acquiring short exposure images may be dynamically determined based on characteristics (for example, a lighting environment, a type of a subject) of a scene for photographing in addition to photographing configuration information set by a user, so that a plurality of short exposure images needed to generate a long exposure image are efficiently acquired. Furthermore, in various embodiments, when a camera is set to an auto mode, a photographing configuration determined by an auto exposure (AE) algorithm of the camera may be updated based on a result of analyzing a preview image provided before photographing, to allow acquisition of short exposure images.

The technical objects to be achieved by the disclosure are not limited to those mentioned above, and other technical objects that are not mentioned above may be clearly understood to those skilled in the art to which the disclosure pertains.

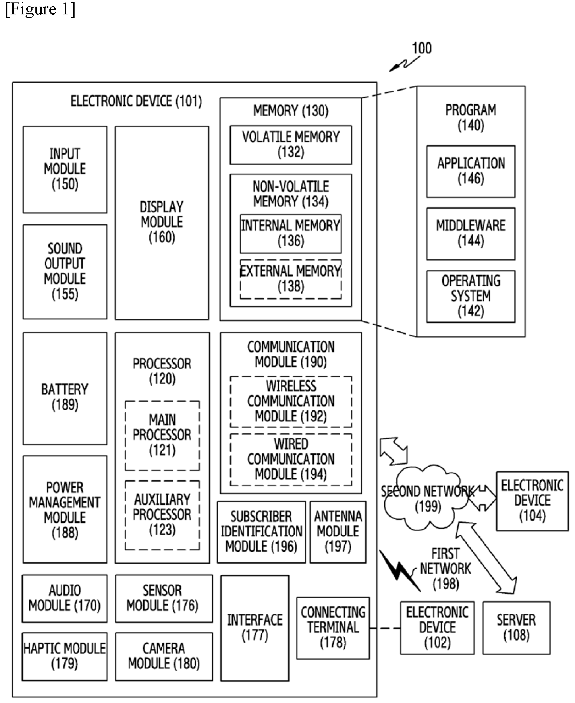

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{TM}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

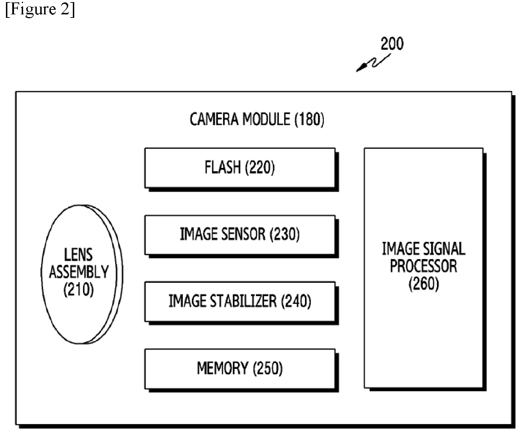

FIG. 2 is a block diagram 200 illustrating the camera module 180 according to various embodiments.

Referring to FIG. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

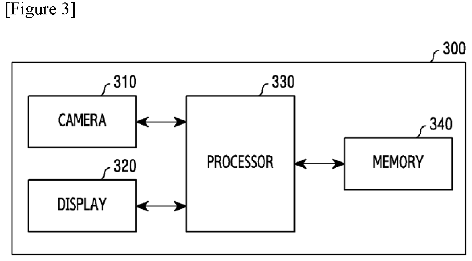

FIG. 3 is a view to explain a configuration of an electronic device 300 according to an embodiment.

Referring to FIG. 3, the electronic device 300 may be a device that dynamically determines a photographing configuration for acquiring short exposure images based on scene characteristics analyzed while providing a preview image, and a strength of an ND filter effect, acquires a plurality of short exposure images, and acquires a long exposure image expressing saturated regions and object motions in a manner similar to that of an actual ND filter by synthesizing the acquired short exposure images, and may include a camera 310, a display 320, a processor 330, or a memory 340. The electronic device 300 in FIG. 3 may correspond to the electronic device 101 illustrated in FIG. 1.

In an embodiment, the camera 310 (for example, the camera module 180 of FIG. 1) may photograph a subject according to user's manipulation. For example, the camera 310 may acquire a preview image including the subject on a frame basis when a camera application is executed, and may capture an image including the subject when a photographing command (for example, a shutter button input) is inputted while displaying the preview image. According to various embodiment, upon receiving a photographing command, the camera 310 may photograph based on a photographing configuration (for example, ISO sensitivity, shutter speed, or exposure value) determined by an auto exposure (AE) algorithm based on a photographing environment, or a photographing configuration set by a user.

In an embodiment, the display 320 (for example, the display module 160 of FIG. 1) may display an image which is acquired by the camera 310. For example, the display 320 may display a preview image acquired from the camera 310 when the camera application is executed. In another example, the display 320 may display an image acquired in response to a photographing command which is inputted while providing the preview image.

In an embodiment, the display 320 may be configured by one or more of a liquid crystal display (LCD), a thin film transistor LCD (TFT-LCD), organic light emitting diodes (OLED), a light emitting diode (LED), an active matrix organic LED (AMOLED), a flexible display and a 3-dimensional display. In addition, some of these displays may be configured in a transparent type or a light transmission type to allow a user to see the outside therethrough. This may be configured in a transparent display type including a transparent OLED (TOLED).

In an embodiment, the memory 340 (for example, the memory 130 of FIG. 1) may store instructions that, when executed, cause the electronic device 300 to perform various operations by the processor 330 (for example, the processor 120 of FIG. 1). For example, the processor 330 may control to perform operations for acquiring a long exposure image expressing saturated region and subject motions in a similar manner to that of an actual ND filter by synthesizing a plurality of short exposure images.

In an embodiment, the processor 330 may identify configuration information of the camera 310 when the camera application is executed. The configuration information may include at least one of international standard organization (ISO) sensitivity, shutter speed, exposure value or strength of neutral density (ND) filter effect. The configuration information may be set or changed through an execution screen of the camera application.

In an embodiment, the processor 330 may determine a first photographing configuration for providing a preview image based on the identified configuration information. The first photographing configuration may include at least one of ISO sensitivity, shutter speed or exposure value which is actually applied to a camera system while the preview image is being provided. For example, when it is identified that the camera 310 is set to a manual mode, the processor 330 may identify a configuration value for each item in the configuration information selected by the user. The processor 330 may determine a configuration value for at least one item of the ISO sensitivity, shutter speed, or exposure value in response to the identified configuration value for each item in the configuration information, and may change the configuration value for the at least one item based on the strength of the ND filter effect selected by the user. For example, when the user selects a configuration value of 'ISO sensitivity of 100, shutter speed of 1/15, ND filter effect strength of 2', the processor 330 may change the configuration to another configuration (for example, 'ISO sensitivity of 100, shutter speed of 1/30 second', or 'ISO sensitivity of 50, shutter speed 1/15 second') having the same brightness as the configuration information selected by the user. The processor 330 may determine the first photographing configuration based on the changed configuration value in order to provide a preview image having the same brightness as the configuration information selected by the user.

In another example, when the camera 310 is set to an auto mode, the processor 330 may determine a configuration value for at least one item of ISO sensitivity, shutter speed or exposure value, and a strength of an ND filter effect, based on at least one of a lighting environment or a type of a subject. In this case, the configuration value for the at least one item and the strength of the ND filter effect may be determined by an auto exposure (AE) algorithm based on a result of analyzing image frames acquired at a previous time. The processor 330 may change the configuration value for the at least one item by considering the determined strength of the ND filter effect, and may determine the changed configuration value for the at least one item as the first photographing configuration. The processor 330 may acquire a preview image based on the first photographing configuration. The processor 330 may analyze the preview image while providing the acquired preview image on the display 320. The processor 330 may generate a plurality of photographing configuration candidates, as a result analyzing the preview image, based on the configuration value for each item of the first photographing configuration and the determined strength of the ND filter effect, and may select one of the plurality of photographing configuration candidates based on the result of analyzing the preview image and a photographing policy of the camera.

According to various embodiments, the processor 330 may select one of the plurality of photographing configuration candidates in the process of determining the first photographing configuration. When the configuration value for at least one item of the ISO sensitivity, shutter speed, or exposure value is determined based on the AE algorithm, the processor 330 may identify the strength of the applicable ND filter effect based on the result of analyzing the preview image, and may generate a list containing a plurality of different photographing configuration candidates to enable acquisition of an image having the same brightness as the configuration value for the at least one item, by considering the identified strength of the ND filter effect. For example, when the configuration value for the at least one item is determined to be 'ISO sensitivity of 100, shutter speed of 1/60 second', the processor 330 may determine all photographing configurations enabling acquisition of the image having the same brightness as the determined configuration value, and the strength of the ND filter effect as the plurality of photographing configuration candidates (for example: candidate 1 (ISO sensitivity of 100, shutter speed of 1/30, ND filter effect strength of 2), candidate 2 (ISO sensitivity of 100, shutter speed of 1/15, ND filter effect strength of 4), candidate 3 (ISO sensitivity of 100, shutter speed of 1/8, ND filter effect strength of 8), candidate 4 (ISO sensitivity of 100, shutter speed of 1, ND filter effect of 64)). The processor 330 may determine, as the first photographing configuration, a photographing configuration candidate that is selected from among the plurality of photographing configuration candidates based on the result of analyzing the preview image and a designated condition. Here, the result of analyzing the preview image may include at least one of a lighting environment (for example, daytime or nighttime, indoor or outdoor) or a type of a subject (for example, water (waterfall, sea, fountain), car trail, night flash or other normal scenes) that is analyzed while providing the preview image. The designated condition may be associated with a photographing policy of the camera 310 that defines which configuration value in the first photographing configuration should be maintained or which configuration value may be changed. For example, when the photographing policy of 'ISO sensitivity maintenance' is set, the processor 330 may exclude a photographing configuration candidate that has a different configuration value from the ISO in the first photographing configuration from the plurality of photographing configuration candidates. In another example, when it is identified that the result of analyzing the preview image is 'waterfall in daytime', the processor 330 may determine, as the first photographing configuration, a photographing configuration candidate that has the greatest configuration value for the shutter speed among the remaining photographing configuration candidates in the list. When it is identified that the result of analyzing the preview image is 'normal scene in daytime', the processor 330 may select a photographing configuration candidate that has a configuration value of the shutter speed close to a designated value (for example, 0.5 second) from among the remaining photographing configuration candidates in the list as the first photographing configuration.

In an embodiment, the processor 330 may provide the preview image based on the first photographing configuration through the display 320. The processor 330 may identify that a user's photographing command (for example, a shutter button input) is received through an execution screen of the camera application while providing the preview image.

In an embodiment, when the processor 330 identifies the photographing command in the middle of providing the preview image, the processor 330 may determine a second photographing configuration for acquiring short exposure images and the number of times of capturing short exposure images. The processor 330 may determine the second photographing configuration based on the identified configuration information (for example, ISO sensitivity, shutter speed, exposure value or ND filter effect strength). For example, when the identified configuration information is selected as 'ISO sensitivity of 50, shutter speed of 1 second, ND filter effect strength of 8', the processor 330 may determine 'ISO sensitivity of 50, shutter speed of 1/8 second' as a configuration value of the second photographing configuration.

According to various embodiments, the processor 330 may select one of a plurality of short exposure photographing configuration candidates in the process of determining the second photographing configuration. The processor 330 may generate a list containing a plurality of short exposure photographing configuration candidates to be used for generating a long exposure image based on the configuration information identified while providing the preview image. The configuration information may be a configuration value for each item (for example, ISO sensitivity, shutter speed, exposure value or ND filter effect) related to photographing by the camera 310, and may be a value that is set by a user in the case of a manual mode or a value that is determined by an AE algorithm in the case of an auto mode. For example, when the identified configuration information is 'ISO sensitivity of 50, shutter speed of 1 second, ND filter effect strength of 8', all short exposure photographing configurations that enable acquisition of an image having the same brightness as the identified configuration information may be determined as the plurality of short exposure photographing configuration candidates. The processor 330 may determine a short exposure photographing configuration candidate that is selected from among the plurality of short exposure photographing configuration candidates based on hardware specification of the camera 310 and a designated condition, as the second photographing configuration. Here, the hardware specification may include a range that is selectable as a photographing configuration in the camera 310 (for example, a configuration range of ISO sensitivity, a configuration range of shutter speed, or a configuration range of exposure value), a maximum frame rate of the camera 310. The designated condition may be associated with a photographing policy of the camera 310 that defines which configuration value in the identified configuration information should be maintained or which configuration value may be changed in selecting the second photographing configuration from among the plurality of short exposure photographing configuration candidates. For example, when the configuration range of the ISO sensitivity available in the camera 310 is 25 to 1500 and the configuration range of the shutter speed is 1/125 second to 1 second, the processor 330 may exclude a short exposure photographing configuration candidate that falls out of the corresponding ranges from the plurality of short exposure photographing configuration candidates. In another example, when the photographing policy of 'ISO sensitivity maintenance' is set, the processor 330 may select a short exposure photographing configuration candidate that has the same configuration value as the ISO in the identified configuration information from among the remaining short exposure photographing configuration candidates in the list as the second photographing configuration.

In an embodiment, the processor 330 may determine the number of times of capturing short exposure images, based on the shutter speed according to the identified configuration information (for example, a shutter speed set by the user in the case of a manual mode or a shutter speed determined by the processor 330 in the case of an auto mode), the shutter speed according to the second photographing configuration, or the maximum frame rate of the camera 310. The processor 330 may compare the shutter speed of the second photographing configuration and a limited shutter speed, and may determine the number of times of capturing the short exposure images based on a result of comparing. For example, when the shutter speed in the second photographing configuration is greater than or equal to the limited shutter speed, the processor 330 may determine the quotient that results from dividing the shutter speed according to the identified configuration information (for example, the shutter speed set by the user in the case of a manual mode or the shutter speed determined by the processor 330 in the case of an auto mode) by the shutter speed in the second photographing configuration as the number of times of capturing the short exposure images. In this case, the limited shutter speed may be determined based on the maximum frame rate (the number of images that are obtainable per second) of the camera 310. When the maximum frame rate of the camera 310 is 30 FPS, the limited shutter speed may be the reciprocal number thereof, about 0.033 second. When the shutter speed according to the identified configuration information (for example, the shutter speed set by the user in the case of a manual mode, or the shutter speed determined by the processor 330 in the case of an auto mode) is 1 second and the shutter speed in the second photographing configuration is 0.25 second, the processor 330 may determine 4 that results from dividing the shutter speed (1 second) according to the identified configuration information by the shutter speed (0.25 second) in the second photographing configuration as the number of times of capturing the short exposure images. In another example, when the shutter speed in the second photographing configuration is smaller than the limited shutter speed, the processor 330 may determine the quotient that results from dividing the shutter speed according to the identified configuration information by the limited shutter speed as the number of times of capturing the short exposure images. When the shutter speed according to the identified configuration information is 1 second and the shutter speed in the second photographing configuration is 0.017 second, the processor 330 may determine 30 that results from dividing the shutter speed (1 second) according to the identified configuration information by the limited shutter speed (0.033 second) as the number of capturing the short exposure images.

In an embodiment, the processor 330 may change the shutter speed in the second photographing configuration according to the result of comparing the shutter speed in the second photographing configuration and the limited shutter speed. The processor 330 may determine whether the configuration value for the shutter speed according to the second photographing configuration is greater than or equal to the limited shutter speed. When the shutter speed in the second photographing configuration is greater than or equal to the limited shutter speed as a result of determining, the processor 330 may define the configuration value for the shutter speed according to the second photographing configuration as a reference shutter speed, and may change the shutter speed in the second photographing configuration to have a value smaller than or equal to the limited shutter speed. For example, the processor 330 may recalculate the shutter speed in the second photographing configuration by using a function that is based on the shutter speed according to the identified configuration information (for example, the shutter speed set by the user in the case of a manual mode or the shutter speed determined by the processor 330 in the case of an auto mode), the limited shutter speed, or the strength of the ND filter effect, thereby updating the configuration value for the shutter speed according to the second photographing configuration. The function may be a function that has characteristics of the monotone decreasing function such that calculation results are the same or decrease as the strength of the ND filter effect increases. When the shutter speed in the second photographing configuration is smaller than the limited shutter speed as a result of determining, the processor 330 may maintain the second photographing configuration determined based on the identified configuration information.

In an embodiment, when the shutter speed in the second photographing configuration is greater than or equal to the limited shutter speed, the processor 330 may determine that the exposure value in the recalculated second photographing configuration is set to a value that is smaller than or equal to the exposure value in the first photographing configuration. For example, when the identified configuration information is 'ISO sensitivity of 100, shutter speed of 1/15 second' and the recalculated second photographing configuration is 'ISO sensitivity of 100, shutter speed of 1/60 second', the processor 330 may determine that the exposure value of the short exposure image is set to be 2EV lower than the exposure value of the long exposure image that the user desires to acquire. In this case, the processor 330 may correct the exposure value of the long exposure image, based on a difference between the configuration value for the shutter speed according to the updated second photographing configuration and the reference shutter speed, in the process of generating the long exposure image after acquiring the short exposure images, and may generate the long exposure image brighter than the exposure value of the short exposure image acquired.

In an embodiment, the processor 330 may acquire a plurality of short exposure images based on the second photographing configuration. The processor 330 may acquire a plurality of short exposure images corresponding to the number of times of capturing the short exposure images, based on the second photographing configuration for a designated time period. The designated time period may be determined in response to the shutter speed in the first photographing configuration.

According to various embodiments, the processor 330 may change the shutter speed of the short exposure images acquired for the designated time period, and time intervals at which the short exposure images are acquired. For example, the processor 330 may set shutter speeds of the odd-numbered images and the even-numbered images of the short exposure images acquired for the designated time period to be different, or may set the time intervals at which the odd-numbered images and the even-numbered images are acquired to be different. In another example, when the lighting environment at the time of photographing is dark, that is, less than or equal to a designated brightness level, the processor 330 may set the shutter speeds of the short exposure images acquired for the designated time period to be the same, and/or may set the short exposure images to be acquired at the equal time intervals.

In an embodiment, the processor 330 may acquire a long exposure image corresponding to the designated time period by synthesizing at least some of the plurality of short exposure images. According to various embodiments, the processor 330 may determine whether it is necessary to correct the brightness for the long exposure image in the process of generating the long exposure image. For example, when it is determined that the exposure value of the short exposure images is set to be lower than the exposure value of the long exposure image that the user desires to acquire, the processor 330 may determine an exposure correction value for the long exposure image based on the exposure value in the second photographing configuration, and may correct the brightness of the long exposure image based on the determined exposure correction value.

In an embodiment, the processor 330 may determine whether the plurality of short exposure images used for generating the long exposure image have been acquired in a stable condition. For example, the processor 330 may determine whether a motion of the electronic device 300 has occurred while acquiring the plurality of short exposure images using one or more sensors (for example, the sensor module 176 of FIG. 1). The one or more sensors may include a gyro sensor, an acceleration sensor or other types of sensors that are capable of detecting a motion of the electronic device 300. When it is determined that a motion of the electronic device 300 has occurred while acquiring the plurality of short exposure images, the processor 330 may generate the long exposure image by matching at least some of the plurality of short exposure images and synthesizing after performing motion compensation with respect to the matched short exposure images.

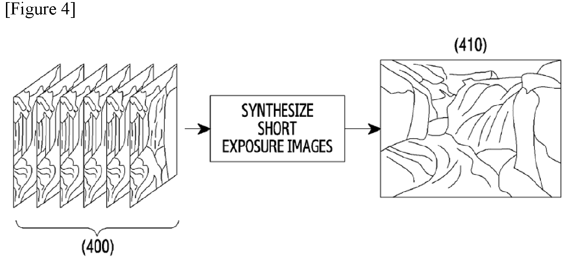

FIG. 4 is a view to explain a method for generating a long exposure image to which an ND filter effect is applied according to an embodiment.

Referring to FIG. 4, the electronic device 300 may generate a long exposure image 410 to which an ND filter effect is applied using a plurality of short exposure images 400. When the electronic device 300 identifies configuration information of a camera (for example, the camera module 180 of FIG. 1 or the camera 310 of FIG. 3), the electronic device 300 may determine a photographing configuration for acquiring short exposure images considering the strength of the ND filter effect according to the configuration information. The configuration information may include at least one of ISO sensitivity, shutter speed, exposure value or ND filter effect strength, and a configuration value for each item in the configuration information may be set by a user in the case of a manual mode, and may be determined by a processor (for example, the processor 120 of FIG. 1 or the processor 330 of FIG. 3) based on an AE algorithm in the case of an auto mode. The photographing configuration for acquiring the short exposure images may include at least one of ISO sensitivity, shutter speed, or exposure value that is actually applied to a camera system during photographing. For example, when the identified configuration information is 'ISO sensitivity of 100, shutter speed of 1 second, ND filter effect strength of 4', the electronic device 300 may determine the photographing configuration for acquiring the short exposure images to 'ISO sensitivity of 100, shutter speed of 1/4 second'. In another example, when the shutter speed in the photographing configuration for acquiring the short exposure images is greater than or equal to a limited shutter speed which is determined based on a maximum frame rate (for example, 30 FPS) of the camera (for example, the camera module 180 of FIG. 1 or the camera 310 of FIG. 3), the electronic device 300 may change the shutter speed in the photographing configuration to have a value that is smaller than or equal to the limited shutter speed.

In an embodiment, the electronic device 300 may acquire the plurality of short exposure images for a designated time period based on the determined photographing configuration. The designated time period may correspond to the shutter speed according to the configuration information (for example, a shutter speed set by a user in the case of a manual mode or a shutter speed determined by the processor 330 in the case of an auto mode). Here, the electronic device 300 may determine the number of times of capturing the short exposure images based on the shutter speed according to the configuration information, the shutter speed according to the photographing configuration for acquiring the short exposure images, or the limited shutter speed. For example, when the shutter speed in the photographing configuration for acquiring the short exposure images is greater than or equal to the limited shutter speed, the electronic device 300 may determine the quotient that results from dividing the shutter speed according to the configuration information by the shutter speed in the photographing configuration as the number of times of capturing the short exposure images. In another example, when the shutter speed in the photographing configuration is smaller than the limited shutter speed, the electronic device 300 may determine the quotient that results from dividing the shutter speed according to the configuration information by the limited shutter speed as the number of times of capturing the short exposure images.

In an embodiment, the electronic device 300 may acquire the long exposure image 410 to which the ND filter effect is applied by synthesizing at least some of the acquired plurality of short exposure images 400.

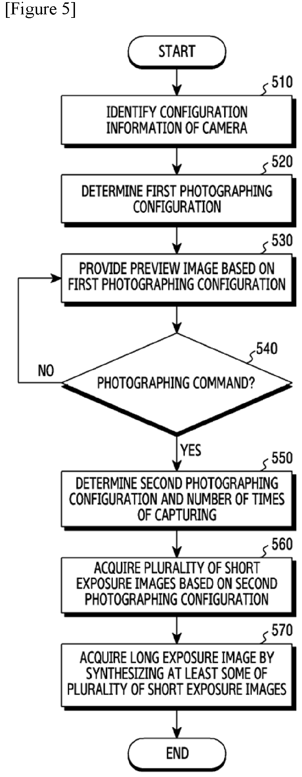

FIG. 5 is a flowchart illustrating an operation method of the electronic device 300 according to an embodiment. According to an embodiment, the electronic device 300 may be a device that dynamically determines a photographing configuration for acquiring short exposure images based on scene characteristics analyzed while providing a preview image and a strength of an ND filter effect, acquires a plurality of short exposure images, and acquires a long exposure image expressing saturated regions and object motions in a similar manner to that of an actual ND filter by synthesizing the acquired short exposure images, and may correspond to the electronic device 101 shown in FIG. 1. Operations of FIG. 5 may be performed by a processor (for example, the processor 120 of FIG. 1 or the processor 330 of FIG. 3) included in the electronic device 300.

Referring to FIG. 5, in operation 510, the electronic device 300 may identify configuration information of a camera (for example, the camera module 180 of FIG. 1 or the camera 310 of FIG. 3). The configuration information may include at least one of international standard organization (ISO) sensitivity, shutter speed, exposure value, or neural density (ND) filter effect strength.

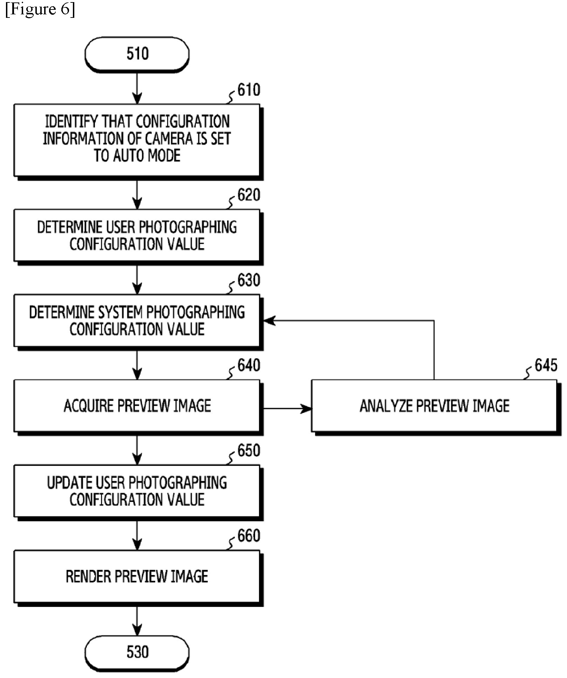

According to an embodiment, in operation 520, the electronic device 300 may determine a first photographing configuration for providing a preview image based on the identified configuration information. The first photographing configuration may include at least one of ISO sensitivity, shutter speed, or exposure value that is actually applied to a camera system while the preview image is being provided. According to various embodiments, the electronic device 300 may determine the first photographing configuration and an ND filter effect strength based on an auto exposure (AE) algorithm when the camera 310 is set to an auto mode. According to various embodiments, operation 520 of determining the first photographing configuration in the auto mode will be described below in detail with reference to FIG. 6.

FIG. 6 is a flowchart illustrating a method for determining the first photographing configuration for acquiring the preview image in the auto mode according to an embodiment. Referring to FIG. 6, in operation 610, the electronic device 300 may identify that the configuration information of the camera 310 is set to the auto mode. In the auto mode, the electronic device 300 may recognize all configuration values in the configuration information as 'auto'. For example, the electronic device 300 may recognize the configuration information as 'ISO sensitivity of auto, shutter speed of auto, exposure value of auto, ND filter effect strength of auto'.

According to an embodiment, in operation 620, the electronic device 300 may determine a user photographing configuration value based on the identified configuration information. For example, the electronic device 300 may remove the value of the ND filter effect that is not allowed to be changed by the camera system from the recognized configuration information 'ISO sensitivity of auto, shutter speed of auto, exposure value of auto, ND filter effect strength of auto', and may determine values for items that are actually allowed to be utilized by the camera system (for example, 'ISO sensitivity of auto, shutter speed of auto, exposure value of auto') as the user photographing configuration value.

According to an embodiment, in operation 630, the electronic device 300 may convert the user photographing configuration value into a system photographing configuration value. The system photographing configuration value may be determined based on an auto exposure (AE) algorithm. For example, the electronic device 300 may determine a configuration value for at least one of ISO sensitivity, shutter speed, or exposure value, by considering at least one of the previously determined ISO sensitivity, shutter speed, and brightness of the preview image acquired based on these.

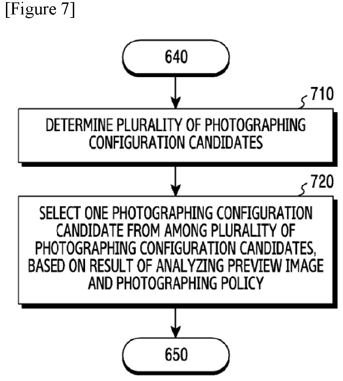

According to an embodiment, in operation 640, the electronic device 300 may acquire the preview image on a frame basis based on the system photographing configuration value. The electronic device 300 may analyze the acquired preview image in operation 645, thereby acquiring a result of analyzing brightness or scene of the preview image. The result of analyzing the scene may include a lighting environment (for example, daytime or nighttime, indoor or outdoor) of the preview image and/or a type of a subject (for example, water (waterfall, sea, fountain), car trail, night flash or other normal scenes). In operation 650, the electronic device 300 may identify the strength of an applicable ND filter effect based on the determined system photographing configuration value and the result of analyzing the preview image in operation 645, and may update the user photographing configuration value based on the identified strength of ND filter effect. According to various embodiments, operation 650 of updating the user photographing configuration value in the auto mode will be described below in detail with reference to FIG. 7.

FIG. 7 is a flowchart illustrating a method for updating the user photographing configuration value while providing the preview image in an auto mode according to an embodiment. Referring to FIG. 7, in operation 710, the electronic device 300 may determine a plurality of different photographing configuration candidates enabling acquisition of the image having the same brightness as the determined/changed system photographing configuration value. For example, when the system photographing configuration is determined as 'ISO sensitivity of 100, shutter speed of 1/125 second', the electronic device 300 may determine a plurality of photographing configuration candidates as shown in the following table 1:

**[Table 1]**

| ISO sensitivity | Shutter speed (second) | ND filter effect (strength) |
|---|---|---|
| 50 | 1/30 | 2 |
| 50 | 1/15 | 4 |
| 100 | 1/60 | 2 |
| 100 | 1/30 | 4 |
| 200 | 1/125 | 2 |
| 200 | 1/60 | 4 |

According to an embodiment, in operation 720, the electronic device 300 may select one photographing configuration candidate from among the plurality of photographing configuration candidates, based on the result of analyzing the preview image and a photographing policy of the camera 310. For example, when photographing policy is set to 'ISO sensitivity maintenance', the electronic device 300 may exclude the photographing configuration candidates having a different configuration value from the ISO sensitivity of 100 in the system photographing configuration from the plurality of photographing configuration candidates. In another example, based on scene characteristics of the preview image acquired by analyzing the preview image, the electronic device 300 may select a photographing configuration candidate that has a shutter speed corresponding to the scene characteristics from among the plurality of photographing configuration candidates. The electronic device 300 may update the user photographing configuration value based on the photographing configuration candidate that is selected from among the plurality of photographing configuration candidates.

Referring back to FIG. 6, in operation 660, the electronic device 300 may acquire the preview image based on the determined system photographing configuration value, and may render the acquired preview image and the updated user photographing configuration value on a display (for example, the display module 160 of FIG. 1 or the display 320 of FIG. 3).

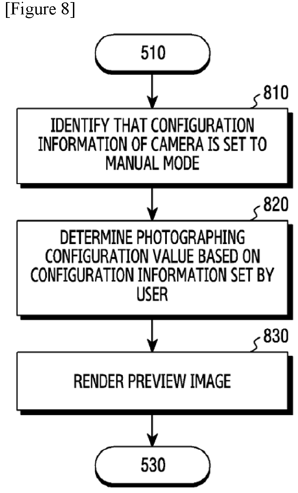

According to various embodiments, when the camera 310 is set to the manual mode, the electronic device 300 may determine the first photographing configuration based on the configuration information selected by the user. According to various embodiments, operation 520 of determining the first photographing configuration in the manual mode will be described below in detail with reference to FIG. 8.

FIG. 8 is a flowchart illustrating a method for determining the first photographing configuration for acquiring the preview image in the manual mode according to an embodiment. Referring to FIG. 8, in operation 810, the electronic device 300 may identify that the configuration information of the camera 310 is set to the manual mode. In the manual mode, the electronic device 300 may identify a configuration value for each item in the configuration information selected by the user.

According to an embodiment, in operation 820, the electronic device 300 may determine a photographing configuration value based on the identified configuration value for each item in the configuration information. For example, the electronic device 300 may determine a configuration value for at least one item of ISO sensitivity, shutter speed or exposure value in response to the identified configuration value for each item in the configuration information, and may change the configuration value for the at least one item based on the strength of ND filter effect selected by the user. The electronic device 300 may determine the photographing configuration value based on the changed configuration value for the at least one item. For example, when the user selects the configuration value of 'ISO sensitivity of 100, shutter speed of 1/15, ND filter effect strength of 2', the electronic device 300 may determine the configuration value of 'ISO sensitivity of 100, shutter speed of 1/30 second' having the same brightness as the configuration information selected by the user as the photographing configuration value.

According to an embodiment, in operation 830, the electronic device 300 may render the preview image on the display 320 based on the photographing configuration value. The electronic device 300 may predict brightness of the long exposure image that the user desires to acquire, based on the preview image rendered on the display 320.

Referring back to FIG. 5, in operation 530, the electronic device 300 may provide the preview image acquired based on the first photographing configuration, and in operation 540, may determine whether a user's photographing command (for example, a shutter button input) is inputted while providing the preview image.

When the photographing command is not inputted as a result of determining (Operation 540-No), the electronic device 300 may resume operation 530 to continuously provide the preview image.

When the photographing command is inputted as a result of determining (Operation 540-Yes), the electronic device 300 may determine a second photographing configuration for acquiring short exposure images and the number of times of capturing the short exposure images in operation 550. According to an embodiment, the electronic device 300 may determine the second photographing configuration based on the identified configuration information of the camera (for example, the user photographing configuration updated in operation 650 or the configuration information set by the user in operation 820). For example, when the identified configuration information is 'ISO sensitivity of 50, shutter speed of 1 second, ND filter effect strength of 8', the electronic device 300 may determine the configuration value of the second photographing configuration to 'ISO sensitivity of 50, shutter speed of 1/8 second'. According to an embodiment, the electronic device 300 may determine the number of times of capturing the short exposure images, based on the identified configuration information (for example, the shutter speed set by the user in the case of a manual mode, or the shutter speed determined by the processor 330 in the case of an auto mode), the shutter speed according to the second photographing configuration, or the maximum frame rate of the camera 310 (for example, the number of images obtainable per 1 second). The electronic device 300 may determine the number of times of capturing the short exposure images based on a result of comparing the shutter speed in the second photographing configuration and a limited shutter speed. The limited shutter speed may be determined based on the maximum frame rate of the camera 310. When the maximum frame rate of the camera 310 is 30 FPS, the limited shutter speed may be the reciprocal number thereof, about 0.033 second. For example, when the shutter speed in the second photographing configuration is greater than or equal to the limited shutter speed, the electronic device 300 may determine the quotient that results from dividing the identified configuration information (for example, the shutter speed set by the user in the case of a manual mode, or the shutter speed determined by the processor 330 in the case of an auto mode) by the shutter speed in the second photographing configuration as the number of times of capturing the short exposure images. When the shutter speed according to the identified configuration information is 1 second and the shutter speed in the second photographing configuration is 0.25 second, the electronic device 300 may determine 4 that results from dividing the shutter speed (1 second) in the first photographing configuration by the shutter speed (0.25 second) in the second photographing configuration as the number of times of capturing the short exposure images. In another example, when the shutter speed in the second photographing configuration is smaller than the limited shutter speed, the electronic device 300 may determine the quotient that results from dividing the shutter speed according to the identified configuration information by the limited shutter speed as the number of times of capturing the short exposure images. When the shutter speed according to the identified configuration information is 1 second and the shutter speed in the second photographing configuration is 0.017 second, the electronic device 300 may determine 30 that results from dividing the shutter speed (1 second) according to the identified configuration information by the limited shutter speed (0.033 second) as the number of capturing the short exposure images.

According to various embodiments, in operation 550, the electronic device 300 may determine the second photographing configuration by selecting one of the plurality of short exposure photographing configuration candidates. The electronic device 300 may determine the plurality of short exposure photographing configuration candidates enabling acquisition of a long exposure image by considering the identified configuration information. For example, when the identified configuration information is 'ISO sensitivity of 50, shutter speed of 1 second, ND filter effect strength of 8', short exposure photographing configurations enabling acquisition of an image having the same brightness may be determined as the plurality of short exposure photographing configuration candidates as shown in the following table 2.

**[Table 2]**

| Short exposure photographing configuration candidates | ISO sensitivity | Shutter speed (second) | Exposure value (EV) |
|---|---|---|---|
| 1 | 12 | 1/2 | 0 |
| 2 | 25 | 1/4 | 0 |
| 3 | 50 | 1/8 | 0 |
| 4 | 100 | 1/15 | 0 |
| 5 | 200 | 1/30 | 0 |
| 6 | 400 | 1/60 | 0 |
| 7 | 800 | 1/125 | 0 |
| 8 | 1600 | 1/250 | 0 |

According to an embodiment, the electronic device 300 may determine a short exposure photographing configuration candidate that is selected from among the plurality of short exposure photographing configuration candidates based on hardware specification of the camera 310 and a designated condition as the second photographing configuration. Here, the hardware specification may include a range that is selectable as a photographing configuration in the camera 310 (for example, a configuration range of ISO sensitivity, a configuration range of shutter speed, or a configuration range of exposure value), a maximum frame rate of the camera 310. The designated condition may be associated with a photographing policy of the camera 310 that defines which configuration value in the identified configuration information should be maintained or which configuration value may be changed in selecting the second photographing configuration from among the plurality of short exposure photographing configuration candidates. For example, when the configuration range of the ISO sensitivity available in the camera 310 is 25 to 1500 and the configuration range of the shutter speed is 1/125 second to 1 second, the electronic device 300 may exclude short exposure photographing configuration candidates 1, 8 that fall out of the corresponding ranges from the plurality of short exposure photographing configuration candidates of Table 2. In another example, when the photographing policy of 'ISO sensitivity maintenance' is set, the electronic device 330 may select the short exposure photographing configuration candidate 3 that has the same configuration value as the ISO in the configuration information from among the remaining short exposure photographing configuration candidates in Table 2 as the second photographing configuration.

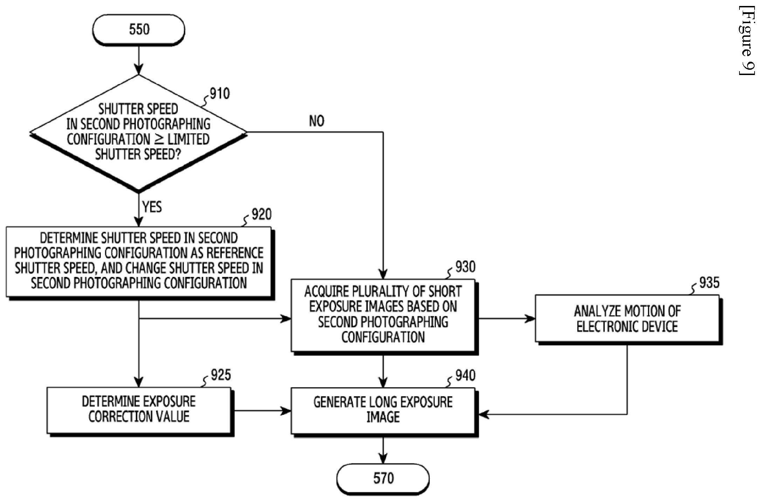

According to various embodiments, the electronic device 300 may change the second photographing configuration determined in operation 550 according to a result of comparing the shutter speed in the second photographing configuration and the limited shutter speed. According to various embodiments, determining/changing the second photographing configuration and acquiring short exposure images will be described below in detail with reference to FIG. 9.

FIG. 9 is a flowchart illustrating a method for generating the long exposure image to which the ND filter effect is applied using the plurality of short exposure images according to an embodiment. Referring to FIG. 9, in operation 910, the electronic device 300 may determine whether the shutter speed in the second photographing configuration is greater than or equal to the limited shutter speed.

When the shutter speed in the second photographing configuration is greater than or equal to the limited shutter speed as a result of determining (Operation 910-Yes), the electronic device 300 may define the configuration value of the shutter speed according to the second photographing configuration as a reference shutter speed, and may change the shutter speed in the second photographing configuration to have a value that is greater than or equal to the limited shutter speed in operation 920. For example, the electronic device 300 may recalculate the shutter speed in the second photographing configuration using a function that is based on the shutter speed in the second photographing configuration, the limited shutter speed or the strength of the ND filter effect, and may update the configuration value of the shutter speed according to the second photographing configuration. The function may be a function that has characteristics of the monotone decreasing function such that calculation results are the same or decrease as the strength of the ND filter effect increases. In operation 925, the electronic device 300 may change the number of times of capturing the short exposure images based on the changed second photographing configuration, the shutter speed set by the user (or the shutter speed determined by the processor 330 in the case of an auto mode), or the maximum frame rate of the camera 310 (that is, the number of images obtainable per 1 second).

In operation 925, the electronic device 300 may calculate an exposure value in the second photographing configuration based on a difference between the configuration value of the shutter speed according to the changed second photographing configuration, and the reference shutter speed, and may determine an exposure correction value for the long exposure image based on the calculated exposure value in the second photographing configuration. For example, when the identified configuration information is 'ISO sensitivity of 100, shutter speed of 1 second, ND filter effect strength of 4', if it is identified that the reference shutter speed is 1/4 second and the calculated exposure value in the second photographing configuration is 1/15 second, the electronic device 300 may determine that the exposure value of the short exposure image is set to be 2EV lower than the exposure value of the long exposure image that the user desires to acquire, and may correct the exposure value of the long exposure image to increase by 2EV when generating the long exposure image. In operation 930, the electronic device 300 may acquire the plurality of short exposure images based on the second photographing configuration of operation 920. In operation 930, the electronic device may also acquire metadata (for example, a photographing time, an image format) for each of the plurality of short exposure images.

When the shutter speed in the second photographing configuration is smaller than the limited shutter speed as a result of determining (Operation 910-No), the electronic device 300 may acquire the plurality of short exposure images and the metadata for each of the plurality of short exposure images based on the second photographing configuration of operation 550 in operation 930.

According to an embodiment, the electronic device 300 may acquire the plurality of short exposure images based on the second photographing configuration for a designated time period in operation 930. The designated time period may be determined in response to the shutter speed set by the user (or the shutter speed determined by the processor 330 in the case of an auto mode). According to various embodiments, the shutter speed of the short exposure images acquired for the designated time period and the time intervals at which the short exposure images are acquired may be set to be the same or different. For example, the electronic device 300 may set shutter speeds of the odd-numbered images and the even-numbered images of the short exposure images acquired for the designated time period to be different, or may set the time intervals at which the odd-numbered images and the even-numbered images are acquired to be different. In another example, when the lighting environment at the time of photographing is dark, that is, less than or equal to a designated brightness level, the electronic device 300 may set the shutter speeds of the short exposure images acquired for the designated time period to be the same, and/or may set the short exposure images to be acquired at the equal time intervals.

According to an embodiment, in operation 935, the electronic device 300 may analyze whether a motion of the electronic device 300 occurs while acquiring the plurality of short exposure images. For example, the electronic device 300 may identify a time at which each short exposure image is captured based on metadata on each of the plurality of short exposure images, and may identify whether a motion of the electronic device 300 occurs at the corresponding time from one or more sensors (for example, the sensor module 176 of FIG. 1). The one or more sensors may include a gyro sensor, an acceleration sensor, or other types of sensors capable of detecting a motion of the electronic device 300.

According to an embodiment, in operation 940, the electronic device 300 may generate a long exposure image using the acquired plurality of short exposure images. In this process, the electronic device 300 may determine whether it is necessary to correct the long exposure image. For example, when it is determined that the exposure value of the short exposure images is set to be lower than the exposure value of the long exposure image that the user desires to acquire, the electronic device 300 may determine an exposure correction value for the long exposure image based on the exposure value in the second photographing configuration, and may correct the brightness of the long exposure image based on the determined exposure correction value. In another example, when the electronic device 300 analyzes that a motion of the electronic device 300 occurs while acquiring the plurality of short exposure images, the electronic device 300 may match at least some of the plurality of short exposure images that are used for generating the long exposure image, and may perform motion compensation with respect to the matched short exposure image.

Referring back to FIG. 5, in operation 560, the electronic device 300 may acquire the plurality of short exposure images based on the determined second photographing configuration, and in operation 570, the electronic device 300 may acquire the long exposure image corresponding to the designated time period by synthesizing at least some of the plurality of short exposure images.

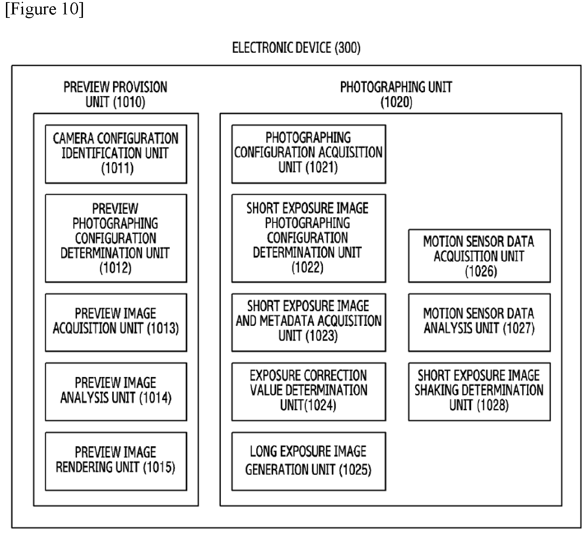

FIG. 10 is a view to explain a detailed configuration of the electronic device 300 according to an embodiment. Functions or operations explained with reference to FIG. 10 may be understood as being performed by the processor 330 of the electronic device 300 of FIG. 3 (for example, an application processor). For example, a camera configuration identification unit 1011, a preview photographing configuration determination unit 1012, a preview image acquisition unit 1013, a preview image analysis unit 1014, a preview image rendering unit 1015 of a preview provision unit 1010, and a photographing configuration acquisition unit 1021, a short exposure image photographing configuration determination unit 1022, a short exposure image and metadata acquisition unit 1023, an exposure correction value determination unit 1024, a long exposure image generation unit 1025, a motion sensor data acquisition unit 1026, a motion sensor data analysis unit 1027, a short exposure image shaking determination unit 1028 of a photographing unit 1020 may be implemented by a software module including at least one instruction. The processor 330 may execute instructions stored in the memory 340 to implement the software modules illustrated in FIG. 10, and may control hardware (for example, the camera 310, the display 320, or the memory 340 of FIG. 3) related to functions. According to various embodiments, the electronic device 300 is not limited to the components illustrated in FIG. 10, and may additionally include a component corresponding a function requested in the electronic device 300 among the components illustrated in FIG. 1.

Referring to FIG. 10, the electronic device 300 may include the preview provision unit 1010 to provide a preview image acquired through the camera 310, and the photographing unit 1020 to acquire a long exposure image in response to a photographing command inputted while providing the preview image.

In an embodiment, the preview provision unit 1010 may include the camera configuration identification unit 1011, the preview photographing configuration determination unit 1012, the preview image acquisition unit 1013, the preview image analysis unit 1014, or the preview image rendering unit 1015.

In an embodiment, the camera configuration identification unit 1011 may identify configuration information of the camera 310 when a camera application is executed. The configuration information may include at least one of international standard organization (ISO) sensitivity, shutter speed, exposure value or neutral density (ND) filter effect strength.

In an embodiment, the preview photographing configuration determination unit 1021 may determine a first photographing configuration for providing a preview image based on the identified configuration information. The first photographing configuration may include at least one of ISO sensitivity, shutter speed, or exposure value that is actually applied to a camera system while the preview image is being provided.

According to various embodiments, when the camera 310 is set to an auto mode, the preview photographing configuration determination unit 1021 may acquire a configuration value for at least one item of the ISO sensitivity, shutter speed, or exposure value for acquiring the preview image using an auto exposure (AE) algorithm. The electronic device 300 may analyze the preview image while providing the preview image, and may identify a strength of applicable ND filter effect based on a result of analyzing the preview image (for example, a lighting environment or a type of a subject). The electronic device 300 may change the configuration value for the at least one item based on the identified strength of ND filter effect, and may render the preview image on the display based on the changed configuration value for the at least one item and the strength of ND filter effect, and may provide the preview image to the user.

According to various embodiments, when the camera 310 is set to a manual mode, the preview photographing configuration determination unit 1021 may identify a configuration value for each item in the configuration information that is selected by the user, and may determine a configuration value for at least one item of the ISO sensitivity, shutter speed or exposure value in response to the identified configuration value for each item in the configuration information. The preview photographing configuration determination unit 1021 may change the configuration value for the at least one item based on the strength of ND filter effect selected by the user, and may determine the first photographing configuration based on the changed configuration value.

In an embodiment, the preview image acquisition unit 1013 may acquire a preview mage based on the determined first photographing configuration using the camera 310.

In an embodiment, the preview image analysis unit 1014 may analyze the acquired preview image. The preview image analysis unit 1014 may analyze the most recently acquired preview image while providing the preview image. The result of analyzing the preview image may include at least one of a lighting environment (for example, daytime or nighttime, indoor or outdoor) that is analyzed while the preview image is being provided, or a type of a subject (for example, water (waterfall, sea, fountain), car trail, night flash or other normal scenes). The preview image analysis unit 1014 may continuously analyze the preview image while providing the preview image. According to various embodiments, the first photographing configuration may be continuously changed/updated based on the result of analyzing the preview image while the preview image is being provided.

In an embodiment, the preview image rendering unit 1015 may render the preview image acquired based on the first photographing configuration on the display 320 and may provide the same.

In an embodiment, when it is identified that a user's photographing command (for example, a shutter button input) is inputted while the preview image is being provided, the electronic device 300 may stop updating the preview image by the preview provision unit 1010, and may transmit the photographing command to the photographing unit 1020 to acquire an image.

In an embodiment, the photographing unit 1020 may include the photographing configuration acquisition unit 1021, the short exposure image photographing configuration determination unit 1022, the short exposure image and metadata acquisition unit 1023, the exposure correction value determination unit 1024, the long exposure image generation unit 1025, the motion sensor data acquisition unit 1026, the motion sensor data analysis unit 1027, or the short exposure image shaking determination unit 1028.

In an embodiment, when the photographing command is inputted, the photographing configuration acquisition unit 1021 may acquire the photographing configuration that is determined/updated while the preview image is being provided from the preview provision unit 1010. The photographing configuration acquisition unit 1021 may identify hardware specification of the camera 310 and a photographing policy of the camera 310 which are needed to determine a second photographing configuration for acquiring short exposure images. The hardware specification may include a range that is selectable as a photographing configuration in the camera 310 (for example, a configuration range of ISO sensitivity, a configuration range of shutter speed or a configuration range of exposure value), a maximum frame rate of the camera 310. The photographing policy may be understood as defining which configuration value in the photographing configuration determined/updated while the preview image is being provided should be maintained or which configuration value may be changed in the process of determining the second photographing configuration for acquiring the short exposure images.

In an embodiment, the short exposure image photographing configuration determination unit 1022 may determine the second photographing configuration for acquiring the short exposure images based on the photographing configuration. According to various embodiments, the short exposure image photographing configuration determination unit 1022 may determine a plurality of short exposure photographing configuration candidates enabling acquisition of a long exposure image corresponding to the shutter speed in the photographing configuration, and may determine a short exposure photographing configuration candidate selected from among the plurality of short exposure photographing configuration candidates as the second photographing configuration. In this case, the short exposure image photographing configuration determination unit 1022 may select a short exposure photographing configuration candidate that satisfies the hardware specification of the camera 310 and the photographing policy of the camera 310 from among the plurality of short exposure photographing configuration candidates as the photographing configuration.

The short exposure image photographing configuration determination unit 1022 may change the second photographing configuration according to a result of comparing the shutter speed in the second photographing configuration and the limited shutter speed. The short exposure image photographing configuration determination unit 1022 may define a configuration value of the shutter speed according to the second photographing configuration as a reference shutter speed, and, when the shutter speed in the second photographing configuration is greater than or equal to the limited shutter speed, the short exposure image photographing configuration determination unit 1022 may change the shutter speed in the second photographing configuration to have a value that is greater than or equal to the limited shutter speed. For example, the electronic device 300 may recalculate the shutter speed in the second photographing configuration using a function that is based on the shutter speed in the second photographing configuration, the limited shutter speed or the strength of the ND filter effect, and may update the configuration value of the shutter speed in the second photographing configuration. When the shutter speed in the second photographing configuration is smaller than the limited shutter speed, the short exposure image photographing configuration determination unit 1022 may maintain the second photographing configuration.

Furthermore, the short exposure image photographing configuration determination unit 1022 may determine the number of times of capturing the short exposure images, based on the shutter speed in the photographing configuration, the shutter speed according to the second photographing configuration, or the maximum frame rate of the camera 310. The short exposure image photographing configuration determination unit 1022 may compare the shutter speed in the second photographing configuration and the limited shutter speed, and may determine the number of times of capturing the short exposure images based on a result of comparing. For example, when the shutter speed in the second photographing configuration is greater than or equal to the limited shutter speed, the short exposure image photographing configuration determination unit 1022 may determine the quotient that results from dividing the shutter speed in the photographing configuration by the shutter speed in the second photographing configuration as the number of times of capturing the short exposure images. The limited shutter speed may be determined based on the maximum frame rate (that is, the number of images obtainable per 1 second) of the camera 310. In another example, when the shutter speed in the second photographing configuration is smaller than the limited shutter speed, the short exposure image photographing configuration determination unit 1022 may determine the quotient that results from dividing the shutter speed in the photographing configuration by the limited shutter speed as the number of times of capturing the short exposure images.

In an embodiment, the short exposure image and metadata acquisition unit 1023 may acquire a plurality of short exposure images and metadata (for example, a photographing time, an image format) for each of the plurality of short exposure images, based on the second photographing configuration. The short exposure image and metadata acquisition unit 1023 may acquire a plurality of short exposure images corresponding to the number of times of capturing the short exposure images, based on the second photographing configuration for a designated time period. The designated time period may be determined in response to the identified shutter speed in the photographing configuration. According to various embodiments, the short exposure image and metadata acquisition unit 1023 may change the shutter speed of the short exposure images acquired for the designated time period, and time intervals at which the short exposure images are acquired. For example, the short exposure image and metadata acquisition unit 1023 may set shutter speeds of the odd-numbered images and the even-numbered images of the short exposure images acquired for the designated time period to be different, or may set the time intervals at which the odd-numbered images and the even-numbered images are acquired to be different. In another example, when the lighting environment at the time of photographing is dark, that is, less than or equal to a designated brightness level, the short exposure image and metadata acquisition unit 1023 may set the shutter speeds of the short exposure images acquired for the designated time period to be the same, and/or may set the short exposure images to be acquired at the equal time intervals.

In an embodiment, the exposure correction value determination unit 1024 may determine whether it is necessary to correct brightness in the process of generating the long exposure image, and may determine an exposure correction value for correcting brightness. For example, when it is determined that the exposure value of the short exposure images is set to be lower than the exposure value of the long exposure image that the user desires to acquire, the exposure correction value determination unit 1024 may determine an exposure correction value for the long exposure image based on the exposure value in the second photographing configuration.

In an embodiment, the long exposure image generation unit 1025 may acquire the long exposure image corresponding to the designated time period by synthesizing at least some of the plurality of short exposure images.

In an embodiment, the motion sensor data acquisition unit 1026 may acquire sensor data related to a motion of the electronic device 300 that is detected at the time of capturing the plurality of short exposure images from one or more sensors (for example, the sensor module 176 of FIG. 1), in order to determine whether the plurality of short exposure images used for generating the long exposure image have been acquired in a stable condition. The one or more sensors may include a gyro sensor, an acceleration sensor, or other types of sensors capable of detecting a motion of the electronic device 300. The motion sensor data acquisition unit 1026 may acquire sensor data corresponding to the time at which each short exposure image is captured, based on metadata for each of the plurality of short exposure images.

In an embodiment, the motion sensor data analysis unit 1027 may analyze the sensor data related to the motion of the electronic device 300, and may identify whether a motion of the electronic device 300 has occurred while acquiring the plurality of short exposure images.

In an embodiment, when it is analyzed that the motion of the electronic device 300 has occurred while the plurality of short exposure images are being acquired, the short exposure image shaking determination unit 1028 may match at least some of the plurality of short exposure images that are used for generating the long exposure image, and may perform motion compensation with respect to the matched short exposure images.

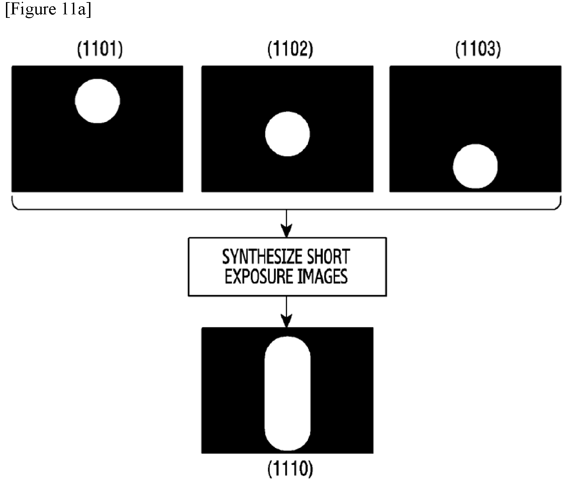

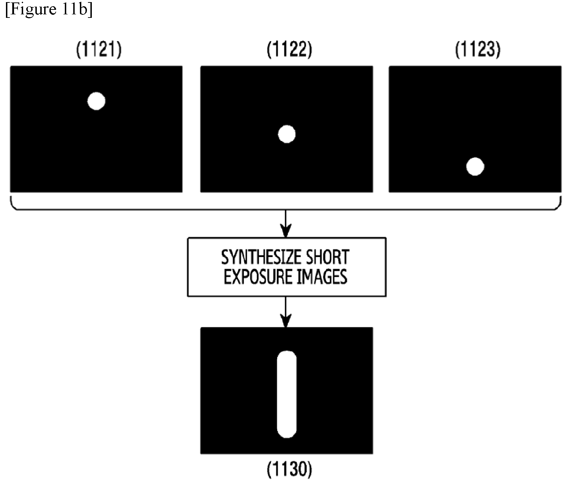

FIGS. 11A and 11B are views to explain an ND filter effect expressed on a long exposure image based on dynamic change in a photographing configuration for acquiring short exposure images according to an embodiment. According to various embodiments, the electronic device 300 may synthesize a plurality of short exposure images including a point light source to acquire an image resulting from photographing the strong point light source moving downward in a photographing environment without light.

In an embodiment, the electronic device 300 may acquire a plurality of short exposure images for an exposure time set based on a user input or an AE algorithm. The plurality of short exposure images may be images resulting from photographing the point light source at different times for the exposure time. According to various embodiments, when the electronic device 300 photographs the point light source without applying the ND filter effect, the electronic device 300 may acquire short exposure images 1101, 1102, 1103 in which the point light source and surrounding regions thereof are widely saturated as shown in FIG. 11A. By synthesizing the acquired short exposure images 1101, 1102, 1103, the electronic device 300 may acquire a long exposure image 1110 in which the saturated regions are superimposed along a motion path of the point light source. In this case, the long exposure image 1110 may be an image in which a saturated region with a wider area than the actual motion of the light source is expressed.

In an embodiment, the electronic device 300 may dynamically change a photographing configuration (for example, ISO sensitivity, shutter speed or exposure value) considering the ND filter effect, and may acquire a plurality of short exposure images based on the changed photographing configuration. For example, when the photographing configuration is set to 'ISO sensitivity of 100, shutter speed of 1/4, ND filter effect strength of 2', the electronic device 300 may determine a second photographing configuration to 'ISO sensitivity of 100, shutter speed of 1/30 second' through the short exposure image photographing configuration determination unit 1022, and the exposure correction value determination unit 1024 may calculate that the image is captured with 2EV lower brightness in the second photographing configuration, based on the photographing configuration and the second photographing configuration. When the electronic device 300 photographs the point light source based on the second photographing configuration changed considering the ND filter effect, the electronic device 300 may acquire short exposure images 1121, 1122, 1123 in which the saturated regions by the point light source are reduced as shown in FIG. 11B. By synthesizing the acquired short exposure images 1121, 1122, 1123, the electronic device 300 may acquire a long exposure image 1130 in which the saturated regions are superimposed along the motion path of the point light source. In this case, the saturated regions of the light source included in the long exposure image 1130 may be expressed similar to the actual motion area of the light source.

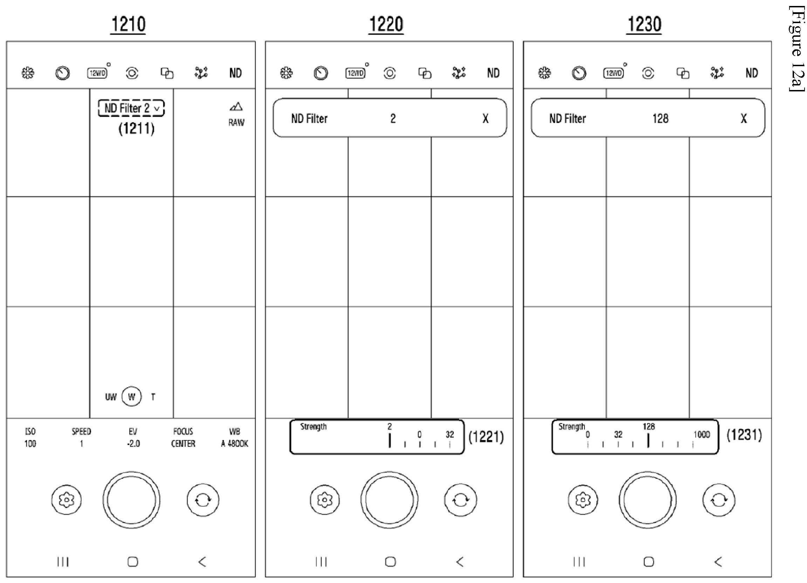

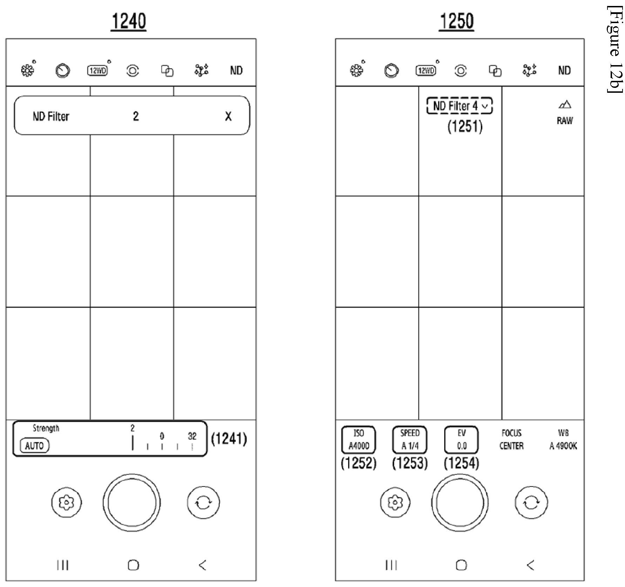

FIGS. 12A and 12B are views to explain a method for setting an ND filter effect through an execution screen of a camera application according to an embodiment. According to various embodiments, the electronic device 300 may set/change the ND filter effect through the execution screen of the camera application while the camera application is being executed.

Referring to FIG. 12A, the electronic device 300 may provide a user interface for a user to directly input/change the configuration of the camera 310 (for example, ISO sensitivity, shutter speed, exposure value, ND filter effect) through an execution screen 1210 of the camera application. When the electronic device 300 detects a user input on an ND filter effect setting menu 1211 of the execution screen 1210, the electronic device 300 may display an interface 1221 at the bottom of the execution screen 1220 to allow the user to set/adjust the strength of the ND filter effect. When the electronic device 300 identifies a user input to set the strength of the ND filter effect to 2 through the interface 1221 of the execution screen 1220, the electronic device 300 may display that the strength of the ND filter effect is set to 2 at the top of the execution screen 1220. When the electronic device 300 identifies a user input to change the strength of the ND filter effect to 128 through an interface 1231 of the execution screen 1230, the electronic device 300 may display that the strength of the ND filter effect is changed to 128 at the top of the execution screen 1230.

Referring to FIG. 12B, when the camera 310 is set to an auto mode, a configuration value for at least one item of ISO sensitivity, shutter speed, exposure value or ND filter effect may be changed. For example, when the electronic device 300 identifies the auto mode configuration through an interface 1241 of an execution screen 1240, the electronic device 300 may display ISO sensitivity 1252, shutter speed 1253, exposure value 1254, ND filter effect strength 1251 set (or changed) through an execution screen 1250.

According to an embodiment, an electronic device (for example, the electronic device 300) may include a camera 310, a display 320, a processor 330, and a memory 340 configured to store instructions, and, when executed by the processor 330, the instructions may cause the electronic device 300 to: identify configuration information of the camera 310; determine a first photographing configuration for providing a preview image based on at least one of the identified configuration information, a lighting environment, a type of a subject or a strength of a neutral density (ND) filter effect; when a photographing command is identified while the preview image is being provided on the display 320 based on the first photographing configuration, determine a second photographing configuration for acquiring a short exposure image and the number of times of capturing the short exposure image; acquire a plurality of short exposure images based on the second photographing configuration for a designated time period; and acquire a long exposure image corresponding to the designated time period by synthesizing at least some of the acquired plurality of short exposure images.

In an embodiment, the configuration information of the camera 310 may include at least one of international standard organization (ISO) sensitivity, shutter speed, exposure value or ND filter effect strength.

In an embodiment, when executed by the processor 330, the instructions may cause the electronic device 300 to, when it is identified that the configuration information is set to an auto mode, determine a configuration value for at least one item of the ISO sensitivity, shutter speed, or exposure value based on at least one of the lighting environment or the type of the subject, and to identify a strength of an ND filter effect applicable while providing the preview image based on the determined configuration value.

In an embodiment, when executed by the processor 330, the instructions may cause the electronic device 300 to determine the first photographing configuration based on an auto exposure (AE) algorithm regarding an image frame analysis result.

In an embodiment, when executed by the processor 330, the instructions may cause the electronic device 300 to: determine a plurality of first photographing configuration candidates based on the configuration value for the at least one item and the strength of the ND filter effect; and determine a first photographing configuration candidate that is selected from among the plurality of first photographing configuration candidates based on a result of analyzing the preview image and a designated condition as the first photographing configuration.

In an embodiment, when executed by the processor 330, the instructions may cause the electronic device 300 to: when it is identified that the configuration information is set to a manual mode, determine a configuration value for at least one item of the ISO sensitivity, shutter speed, or exposure value based on a configuration value for each item in the configuration information that is selected by a user; change the configuration value for the at least one item based on a strength of an ND filter effect selected by the user; and determine the first photographing configuration based on the changed configuration value.

In an embodiment, when executed by the processor 330, the instructions may cause the electronic device 300 to: determine the second photographing configuration for acquiring the short exposure image, based on the identified configuration information; and determine the number of times of capturing the short exposure image, based on a shutter speed according to the configuration information, a shutter speed according to the second photographing configuration, or a maximum frame rate of the camera 310.

In an embodiment, when executed by the processor 330, the instructions may cause the electronic device 300 to: determine whether a configuration value for the shutter speed according to the second photographing configuration is greater than or equal to a limited shutter speed that is determined based on the maximum frame rate of the camera 310; when the configuration value for the shutter speed according to the second photographing configuration is greater than or equal to the limited shutter speed, determine the configuration value for the shutter speed according to the second photographing configuration as a reference shutter speed; and change the configuration value for the shutter speed according to the second photographing configuration, based on the shutter speed according to the second photographing configuration, the limited shutter speed or the strength of the ND filter effect. In an embodiment, when executed by the processor 330, the instruction may cause the electronic device 300 to, when the second photographing configuration is changed, re-determine the number of times of capturing the short exposure image.

In an embodiment, when executed by the processor 330, the instructions may cause the electronic device 300 to: calculate an exposure value according to the second photographing configuration, based on a difference between the changed configuration value for the shutter speed according to the second photographing configuration, and the reference shutter speed; and determine an exposure correction value for the long exposure image based on the determined exposure value according to the second photographing configuration.

In an embodiment, the electronic device 300 may further include one or more sensors configured to detect a motion of the electronic device. When executed by the processor 330, the instructions may cause the electronic device 300 to: determine whether a motion of the electronic device occurs while acquiring the plurality of short exposure images using the one or more sensors; when it is determined that the motion of the electronic device occurs, match at least some of the plurality of short exposure images; and generate the long exposure image after performing motion compensation with respect to the matched short exposure image.

According to an embodiment, a method may include: identifying configuration information of a camera 310 included in an electronic device 300; determining a first photographing configuration for providing a preview image based on at least one of the identified configuration information, a lighting environment, a type of a subject or a strength of a neutral density (ND) filter effect; when a photographing command is identified while the preview image is being provided through a display 320 of the electronic device 300 based on the first photographing configuration, determining a second photographing configuration for acquiring a short exposure image and the number of times of capturing the short exposure image; acquiring a plurality of short exposure images based on the second photographing configuration for a designated time period; and acquiring a long exposure image corresponding to the designated time period by synthesizing at least some of the acquired plurality of short exposure images.

In an embodiment, the configuration information of the camera 310 may include at least one of international standard organization (ISO) sensitivity, shutter speed, exposure value or ND filter effect strength.

In an embodiment, determining the first photographing configuration may include, when it is identified that the configuration information is set to an auto mode, determining a configuration value for at least one item of the ISO sensitivity, shutter speed, or exposure value, and a strength of an ND filter effect based on at least one of the lighting environment or the type of the subject.

In an embodiment, determining the first photographing configuration may include determining the first photographing configuration based on an auto exposure (AE) algorithm regarding an image frame analysis result.

In an embodiment, determining the first photographing configuration may include identifying a strength of an ND filter effect applicable based on a result of analyzing the preview image, and updating the configuration value for the at least one item based on the identified strength of the ND filter effect.

In an embodiment, determining the first photographing configuration may include: determining a plurality of first photographing configuration candidates based on the configuration value for the at least one item and the strength of the applicable ND filter effect; and determining a first photographing configuration candidate that is selected from among the plurality of first photographing configuration candidates based on the result of analyzing the preview image and a designated condition as the first photographing configuration.

In an embodiment, determining the first photographing configuration may include: when it is identified that the configuration information is set to a manual mode, determining a configuration value for at least one item of the ISO sensitivity, shutter speed, or exposure value based on a configuration value for each item in the configuration information that is selected by a user; changing the configuration value for the at least one item based on a strength of an ND filter effect selected by the user; and determining the first photographing configuration based on the changed configuration value.

In an embodiment, determining the second photographing configuration and the number of times of capturing the short exposure image may include: determining the second photographing configuration for acquiring the short exposure image, based on the identified configuration information; and determining the number of times of capturing the short exposure image, based on a shutter speed in the configuration information, a shutter speed according to the second photographing configuration, or a maximum frame rate of the camera 310.

In an embodiment, determining the second photographing configuration may include: determining whether a configuration value for the shutter speed according to the second photographing configuration is greater than or equal to a limited shutter speed that is determined based on the maximum frame rate of the camera 310; when the configuration value for the shutter speed according to the second photographing configuration is greater than or equal to the limited shutter speed, determining the configuration value for the shutter speed according to the second photographing configuration as a reference shutter speed; and changing the configuration value for the shutter speed according to the second photographing configuration, based on the shutter speed according to the second photographing configuration, the limited shutter speed or the strength of the ND filter effect. In an embodiment, determining the second photographing configuration may further include, when the second photographing configuration is changed, re-determining the number of times of capturing the short exposure image.

In an embodiment, the method may further include: calculating an exposure value according to the second photographing configuration, based on a difference between the changed configuration value for the shutter speed according to the second photographing configuration, and the reference shutter speed; and determining an exposure correction value for the long exposure image based on the determined exposure value according to the second photographing configuration.

In an embodiment, acquiring the long exposure image may include: determining whether a motion of the electronic device occurs while acquiring the plurality of short exposure images using one or more sensors; when it is determined that the motion of the electronic device occurs, matching at least some of the plurality of short exposure images; and generating the long exposure image after performing motion compensation with respect to the matched short exposure image.

According to an embodiment, in a computer-readable recording medium having programs executable in a computer recorded thereon, the programs may be caused by the computer to perform the operations of: identifying configuration information of a camera included in an electronic device; determining a first photographing configuration for providing a preview image based on the identified configuration information, a lighting environment, a type of a subject or a strength of a neutral density (ND) filter effect; when a photographing command is identified while the preview image is being provided through a display of the electronic device based on the first photographing configuration, determining a second photographing configuration for acquiring a short exposure image and the number of times of capturing the short exposure image; acquiring a plurality of short exposure images based on the second photographing configuration for a designated time period; and acquiring a long exposure image corresponding to the designated time period by synthesizing at least some of the acquired plurality of short exposure images.

The effect achieved by the disclosure is not limited to those mentioned above, and other effects that are not mentioned above may be clearly understood to those skilled in the art to which the disclosure pertains.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{TM}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a camera;
a display;
a processor; and
a memory configured to store instructions,
wherein the instructions, when executed by the processor, cause the electronic device to:
identify configuration information of the camera;
determine a first photographing configuration for providing a preview image based on at least one of the identified configuration information, a lighting environment, a type of a subject or a strength of a neutral density (ND) filter effect;
when a photographing command is identified while the preview image is being provided on the display based on the first photographing configuration, determine a second photographing configuration for acquiring a short exposure image and the number of times of capturing the short exposure image;
acquire a plurality of short exposure images based on the second photographing configuration for a designated time period; and
acquire a long exposure image corresponding to the designated time period by synthesizing at least some of the acquired plurality of short exposure images.

2. The electronic device of claim 1, wherein the configuration information of the camera comprises at least one of international standard organization (ISO) sensitivity, shutter speed, exposure value or ND filter effect strength.

3. The electronic device of claim 2, wherein the instructions, when executed by the processor, cause the electronic device to, when it is identified that the configuration information is set to an auto mode, determine a configuration value for at least one item of the ISO sensitivity, shutter speed, or exposure value based on at least one of the lighting environment or the type of the subject.

4. The electronic device of claim 3, wherein the instructions, when executed by the processor, cause the electronic device to determine the first photographing configuration based on an auto exposure (AE) algorithm regarding an image frame analysis result.

5. The electronic device of claim 4, wherein the instructions, when executed by the processor, cause the electronic device to:
determine a plurality of first photographing configuration candidates based on the configuration value for the at least one item and the strength of the ND filter effect; and
determine a first photographing configuration candidate that is selected from among the plurality of first photographing configuration candidates based on a result of analyzing the preview image and a designated condition as the first photographing configuration.

6. The electronic device of claim 2, wherein the instructions, when executed by the processor, cause the electronic device to:
when it is identified that the configuration information is set to a manual mode, determine a configuration value for at least one item of the ISO sensitivity, shutter speed, or exposure value based on a configuration value for each item in the configuration information that is selected by a user;
change the configuration value for the at least one item based on a strength of an ND filter effect selected by the user; and
determine the first photographing configuration based on the changed configuration value.

7. The electronic device of claim 1, wherein the instructions, when executed by the processor, cause the electronic device to:
determine the second photographing configuration for acquiring the short exposure image, based on the identified configuration information; and
determine the number of times of capturing the short exposure image, based on a shutter speed in the configuration information, a shutter speed according to the second photographing configuration, or a maximum frame rate of the camera.

8. The electronic device of claim 7, wherein the instructions, when executed by the processor, cause the electronic device to:
determine whether a configuration value for the shutter speed according to the second photographing configuration is greater than or equal to a limited shutter speed that is determined based on the maximum frame rate of the camera;
when the configuration value for the shutter speed according to the second photographing configuration is greater than or equal to the limited shutter speed, determine the configuration value for the shutter speed according to the second photographing configuration as a reference shutter speed;
change the configuration value for the shutter speed according to the second photographing configuration, based on the shutter speed according to the second photographing configuration, the limited shutter speed or the strength of the ND filter effect; and
when the second photographing configuration is changed, re-determine the number of times of capturing the short exposure image.

9. The electronic device of claim 8, wherein the instructions, when executed by the processor, cause the electronic device to:
calculate an exposure value according to the second photographing configuration, based on a difference between the changed configuration value for the shutter speed according to the second photographing configuration, and the reference shutter speed; and
determine an exposure correction value for the long exposure image based on the determined exposure value according to the second photographing configuration.

10. The electronic device of claim 1, further comprising one or more sensors configured to detect a motion of the electronic device,
wherein the instructions, when executed by the processor, cause the electronic device to:
determine whether a motion of the electronic device occurs while acquiring the plurality of short exposure images using the one or more sensors;
when it is determined that the motion of the electronic device occurs, match at least some of the plurality of short exposure images; and
generate the long exposure image after performing motion compensation with respect to the matched short exposure image.

11. A method comprising:
identifying configuration information of a camera included in an electronic device;
determining a first photographing configuration for providing a preview image based on at least one of the identified configuration information, a lighting environment, a type of a subject or a strength of a neutral density (ND) filter effect;
when a photographing command is identified while the preview image is being provided through a display of the electronic device based on the first photographing configuration, determining a second photographing configuration for acquiring a short exposure image and the number of times of capturing the short exposure image;
acquiring a plurality of short exposure images based on the second photographing configuration for a designated time period; and
acquiring a long exposure image corresponding to the designated time period by synthesizing at least some of the acquired plurality of short exposure images.

12. The method of claim 11, wherein determining the first photographing configuration comprises:
when it is identified that the configuration information is set to an auto mode, determining a configuration value for at least one item of international standard organization (ISO) sensitivity, shutter speed, or exposure value based on at least one of the lighting environment or the type of the subject;
determining a plurality of first photographing configuration candidates based on the configuration value for the at least one item and the strength of the ND filter effect; and
determining a first photographing configuration candidate that is selected from among the plurality of first photographing configuration candidates based on a result of analyzing the preview image and a designated condition as the first photographing configuration.

13. The method of claim 12, wherein determining the first photographing configuration comprises:
when it is identified that the configuration information is set to a manual mode, determining a configuration value for at least one item of the ISO sensitivity, shutter speed, or exposure value based on a configuration value for each item in the configuration information that is selected by a user;
changing the configuration value for the at least one item based on a strength of an ND filter effect selected by the user; and
determining the first photographing configuration based on the changed configuration value.

14. The method of claim 11, wherein determining the second photographing configuration and the number of times of capturing the short exposure image comprises:
determining the second photographing configuration for acquiring the short exposure image, based on the identified configuration information; and
determining the number of times of capturing the short exposure image, based on a shutter speed according to the configuration information, a shutter speed according to the second photographing configuration, or a maximum frame rate of the camera.

15. The method of claim 14, wherein determining the second photographing configuration comprises:
determining whether a configuration value for the shutter speed according to the second photographing configuration is greater than or equal to a limited shutter speed that is determined based on the maximum frame rate of the camera;
when the configuration value for the shutter speed according to the second photographing configuration is greater than or equal to the limited shutter speed, determining the configuration value for the shutter speed according to the second photographing configuration as a reference shutter speed;
changing the configuration value for the shutter speed according to the second photographing configuration, based on the shutter speed according to the second photographing configuration, the limited shutter speed or the strength of the ND filter effect;
calculating an exposure value according to the second photographing configuration, based on a difference between the changed configuration value for the shutter speed according to the second photographing configuration, and the reference shutter speed; and
determining an exposure correction value for the long exposure image based on the determined exposure value according to the second photographing configuration, and
wherein the method further comprises, when the second photographing configuration is changed, redetermining the number of times of capturing the short exposure image.
